Europäisches Patentamt

European Patent Office

Office européen des brevets

(19)

(11) Publication number: **0 083 587**
**B1**

(12) **EUROPEAN PATENT SPECIFICATION**

(45) Date of publication of patent specification: **16.09.87**

(51) Int. Cl.⁴: **G 05 D 16/00, G 01 L 7/22**

(21) Application number: **82900512.3**

(22) Date of filing: **11.02.82**

(86) International application number:
**PCT/SE82/00041**

(87) International publication number:
**WO 82/02782 19.08.82 Gazette 82/20**

(54) **APPARATUS FOR REGULATION OF GAS FED FOR GAS CONSUMPTION.**

(30) Priority: **11.02.81 SE 8100938**

(43) Date of publication of application:
**20.07.83 Bulletin 83/29**

(45) Publication of the grant of the patent:
**16.09.87 Bulletin 87/38**

(84) Designated Contracting States:
**AT BE CH DE FR GB LI NL**

(56) References cited:
**GB-A- 10 739**

(73) Proprietor: **ALFA-LAVAL AB**
**Box 500**
**S-147 00 Tumba (SE)**

(72) Inventor: **WIKHOLM, Bert Stefan**
**Ottevägen 115**
**S-146 00 Tullinge (SE)**
Inventor: **CARLSSON, Torsten Lennart Teodor**
**Frejagatan 10 A**
**S-151 41 Södertälje (SE)**
Inventor: **ÖSTER, Ake Rafael**
**Gärdesvägen 19**
**S-147 00 Tumba (SE)**

(74) Representative: **Simpson, Ronald Duncan Innes**
**et al**
**A.A.Thornton & Co. Northumberland House**
**303-306 High Holborn**
**London WCIV 7LE (GB)**

## Description

An apparatus for monitoring gas pressure is known from British Patent No. 10739 of 1905. That apparatus comprises first and second chambers communicating with each other at their lower ends, the lower ends of the chambers being filled, in use, with a liquid, the first chamber having a gas inlet connected in use to a gas source, and liquid level actuated means located in the second chamber. That apparatus is adapted to detect a predetermined degree of gas pressure and to initiate a warning signal when that pressure is detected.

The present invention, however, relates to an apparatus for controlling the flow of gas to a gas consumer from a gas source having a variable output, and is characterized in that the first chamber is connected by a gas outlet to the gas consumer and that the liquid level actuated means is arranged, in response to a predetermined upper liquid level being attained in the second chamber, to initiate a signal to start the consumption of gas by the gas consumer, and in response to a predetermined lower liquid level being attained in the second chamber, to stop the consumption of gas by the gas consumer.

This apparatus facilitates optimal utilization of gas for consumption in such cases, where the supply of gas varies, for instance in anaerobic fermentation of manure in farms, methane gas being formed. This gas can, for instance, be burned in a combustion engine for production of electrical current either directly or via an accumulator tank, which then serves as a gas buffer. The invention also provides an overpressure protection for the gas source and a preset regulation of the gas pressure to the consumer, which might be a motor, a gas boiler, or a gas pipe.

When the produced gas contains condensable or precipitable liquid, as is the case when producing methane by fermentation of manure, the liquid volume will increase in said chambers, by water being separated from the gas. This excess of water must be discharged, which can be done by providing the apparatus with an overflow outlet being located outside the said chambers and communicating with the lower ends of the chambers by means of a pipe, the overflow outlet being located not lower than the said upper liquid level.

If the gas production can occasionally exceed the consumption, a gas overpressure discharge outlet is optionally connected to the second chamber at a position above the said upper liquid level. Such a gas overpressure discharge outlet, which preferably leads out into the free air or to a torch, serves, when handling for instance methane, to prevent excessive gas pressures from being built up in the system and dangerous gas concentrations from being formed indoors.

In some gas production, as in the production of methane gas by fermentation of manure, the gas is not only accompanied by water vapour but also by solid particles. These two products are preferably separated from the gas by arranging for the said gas inlet to open into the first chamber at a substantial distance below the upper end thereof, whilst the gas outlet to the gas consumer is connected to the upper part of this chamber, above the opening of the inlet. In this way water vapour is condensed from the gas phase and is combined with the water in the chamber. The solid particles are also separated and are captured by the water, whilst the gas is discharged through said gas outlet.

The invention is described in more detail in the following, reference being made to the enclosed drawing, which shows, by way of example, an embodiment of the present apparatus. To be more exact:

Figure 1 shows a longitudinal sectional view through the chambers that are included in the apparatus; and

Figure 2 is a cross sectional view, taken from above the chambers.

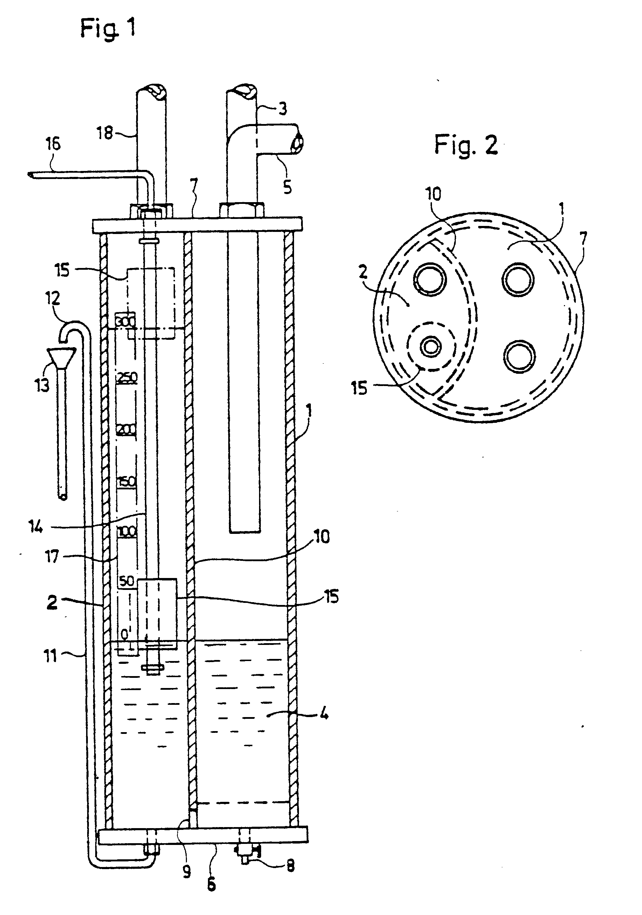

In Figure 1, 1 denotes a first vertical pipe and 2 a second vertical pipe, constituting the first and second chambers of the apparatus. Gas, for example methane produced by anaerobic fermentation of manure, and containing water vapour and solid particles, enters through a line 3, which opens into the pipe 1 at a substantial distance below the upper end thereof. Water condensate drips from the opening of the line 3 down in a quantity of water 4, which is present in the pipe, and which captures separated, solid particles emerging from the inlet line 3. Gas freed from water vapour and solid particles is discharged through a line 5 to the consumer from the top of the pipe 1. The consumer can be a gas combustion boiler or a combustion engine, driving an electric generator. In the line 5 there can be provided a buffer tank for equalizing varying gas production. The two pipes 1 and 2 are closed at the ends by plates 6 and 7, and in the lower of these there is provided a discharge valve 8, through which water containing too much sludge can be removed. The pipes 1 and 2 communicate with each other at their lower ends through a hole 9. As is obvious from Figure 2, one of the pipes, in this case the pipe 2, can have a substantially smaller cross sectional area than the other one. If the pipe 2 has a cross sectional area, which is half of that of the pipe 1, this means that a lowering of the water level in the pipe 1 corresponds to a double rise of the water level in the pipe 2, which increases the precision of the function of the apparatus. As is obvious from Figure 2, the cross sectional form of the chambers or pipes can be optional, and in the embodiment shown, a compact design has been achieved by providing a common, convex wall 10. From the bottom of the pipe 2 there extends — via the bottom plate 6 — a line 11, which leads to an overflow, or to a weir outlet 12. This outlet facilitates the discharge of excess water that is condensed out from the gas in the pipe 1. Via a hopper 13, the water flows on to an outlet.

In the pipe 2 there is provided another pipe 14, containing an upper and a lower contact means, corresponding to respective positions for starting and stopping gas consumption, coacting with a float 15. When there prevails atmospheric pressure in the pipes 1 and 2 (P = 0), the liquid level is the same in both the pipes. The float 15 then resides in its lower position (starting position). Furthermore, the float is arranged, in a way known per se, to act upon the contact means, when in operation it reaches the said starting or stopping positions. Electrical wires 16, connected to said contact means forward the impulses from the contact means for starting and stopping of the consumer. Thus, the float 15, in co-operation with the upper and lower sets of contacts, is arranged to initiate signals for starting and stopping gas consumption, in response to predetermined upper and lower liquid levels being attained in the second pipe. A scale 17 makes it possible to get an idea about the position of the float 15, if at least the pipe 2 is made from a transparent material. From the top of the pipe 2 there extends a line 18 for the discharge of any excess of produced gas to the free atmosphere or to a torch. Otherwise the apparatus is equipped with conventional instruments.

The apparatus operates in the following way:

Before the start of the apparatus the liquid level in the two pipes 1 and 2 is at P = 0 on the scale 17. When the gas flows into the pipe 1, the water level is pressed downwards in this pipe and rises at the same time in the pipe 2. The actual gas pressure can be read from the position of the float 15 in relationship to the scale. When the float has risen to the upper position, indicated by dotted lines (P = 300), the upper contact means initiates a starting signal, and the consumer starts up and continues its consumption until the float has sunk, for instance to position P = 50, assuming that the gas consumption is greater than the gas production. In this latter position the float acts upon the lower contact means, whereupon the consumer or the gas connection to the consumer, is closed down. The gas pressure is then allowed to rise again up to P = 300. If there is an occasional excess production of gas, the liquid level in the pipe 1 will sink down to the position of the hole 9. If the excess production of gas continues, gas will flow through the hole 9 and up through the liquid column in the pipe 2 and reaches the space above this, finally to be discharged through the line 18.

## Claims

1. Apparatus for controlling the flow of gas to a gas consumer from a gas source having a variable output of gas, the apparatus comprising first and second chambers (1, 2) communicating with each other at their lower ends, the lower ends of the chambers being filled, in use, with a liquid, the first chamber having a gas inlet (3) connected in use to the source, and liquid level actuated means (15) located in the second chamber (2), characterized in that the first chamber (1) is connected by a gas outlet (5) to the gas consumer and that the liquid level actuated means (15) is arranged, in response to a predetermined upper liquid level being attained in the second chamber (2), to initiate a signal to start the consumption of gas by the gas consumer, and in response to a predetermined lower liquid level being attained in the second chamber (2), to stop the consumption of gas by the gas consumer.

2. Apparatus according to claim 1, characterized by an overflow outlet (12) being located outside the said chambers (1, 2) and communicating with the lower ends of the chambers by means of a pipe (11), the overflow outlet (2) being located not lower than the said upper liquid level.

3. Apparatus according to claim 1 or 2, characterized in that a gas overpressure discharge outlet (18) is connected to the second chamber (2) at a position above the said upper liquid level.

4. Apparatus according to claim· 1, 2 or 3, characterized in that the said gas inlet (3) opens into the first chamber (1) at a substantial distance below the upper end thereof, and that the said gas outlet (5) is connected to the upper part of the first chamber, above the opening of the inlet (3).

## Patentansprüche

1. Vorrichtung zum Steuern einer Gasströmung von einer Gasquelle mit veränderlicher Gasabgabe zu einem Gasverbraucher, mit einer ersten und einer zweiten Kammer (1, 2), die an ihren unteren Enden miteinander in Verbindung stehen und deren untere Teile betrieblich mit einer Flüssigkeit gefüllt sind, wobei die erste Kammer einen Gaseinlaß (3) aufweist, an den die Quelle betrieblich angeschlossen ist, und in der zweiten Kamer (2) eine vom Flüssigkeitsspiegel betätigte Einrichtung (15) angeordnet ist, dadurch gekennzeichnet, daß die erste Kammer (1) über einen Gasauslaß (5) mit dem Gasverbraucher verbunden und die vom Flüssigkeitsspiegel betätigte Einrichtung (15) so angeordnet ist, daß sie ansprechend auf das Erreichen eines vorbestimmten oberen Flüssigkeitsspiegels in der zweiten Kammer (2) ein Signal auslöst, mit dem der Gasverbrauch durch den Gasverbraucher eingeleitet wird, und ansprechend auf das Erreichen eines vorbestimmten unteren Flüssigkeitsspiegels in der zweiten Kammer (2) den Gasverbrauch durch den Gasverbraucher beendet.

2. Vorrichtung nach Anspruch 1, dadurch gekennzeichnet, daß außerhalb der Kammern (1, 2) ein Überlaufauslaß (12) angeordnet ist und mit den unteren Enden der Kammern über ein Rohr (11) in Verbindung steht, wobei der Überlaufauslaß (12) nicht tiefer als der obere Flüssigkeitsspiegel liegt.

3. Vorrichtung nach Anspruch 1 oder 2, dadurch gekennzeichnet, daß mit der zweiten Kammer (2) ein Gasüberdruck-Auslaß (18) an einer Stelle über dem oberen Flüssigkeitsspiegel verbunden ist.

4. Vorrichtung nach Anspruch 1, 2 oder 3, dadurch gekennzeichnet, daß der Gaseinlaß (3) in einem wesentlichen Abstand unter deren oberen Ende in die erste Kammer (1) mündet und daß der Gasauslaß (5) über der Mündung des Einlasses (3) mit dem oberen Teil der ersten Kammer verbunden ist.

## Revendications

1. Appareil pour commander le débit de gaz vers un dispositif consommateur de gaz à partir d'une source de gaz ayant une sortie de gaz variable, l'appareil comprenant des première et seconde chambres (1, 2) communiquant l'une avec l'autre à leurs extrémités inférieures, les extrémités inférieures des chambres étant remplies, en utilisation, d'un liquide, la première chambre comprenant une entrée de gaz (3) reliée en utilisation à la source et un moyen (15) actionné par le niveau du liquide situé dans la seconde chambre (2), caractérisé en ce que la première chambre (1) est reliée par une sortie de gaz (5) au dispositif consommateur de gaz et en ce que le moyen (15) qui est actionné par le niveau du liquide est aménagé, en réponse à un niveau du liquide supérieur prédéterminé qui est atteint dans la seconde chambre (2), pour initier un signal de démarrage de la consommation de gaz par le dispositif consommateur de gaz, et en réponse à un niveau du liquide inférieur prédéterminé qui est atteint dans la seconde chambre (2), pour arrêter la consommation de gaz par le dispositif consommateur de gaz.

2. Appareil selon la revendication 1, caractérisé en ce qu'une sortie de trop plein (12) est située à l'extérieur desdites chambres (1, 2) et communique avec les extrémités inférieures des chambres par un tuyau (11), la sortie de trop plein (12) n'étant pas située plus bas que ledit niveau supérieur du liquide.

3. Appareil selon la revendication 1 ou 2, caractérisé en ce qu'une sortie de décharge de gaz en surpression (18) est reliée à la seconde chambre (2) dans une position située au-dessus dudit niveau supérieur du liquide.

4. Appareil selon la revendication 1, 2 ou 3, caractérisé en ce que ladite entrée de gaz (3) débouche dans la première chambre (1) à une distance importante au-dessous de son extrémité supérieure, et en ce que ladite sortie de gaz (5) est relié à la partie supérieure de la première chambre, au-dessus de l'ouverture d'entrée (3).

0 083 587

Fig. 1

Fig. 2

1